# EUROPÄISCHE PATENTANMELDUNG

(11) **EP 1 621 458 A2**
(43) Veröffentlichungstag der Anmeldung: **01.02.2006**
(21) Anmeldenummer: 05016552.1
(22) Anmeldetag: 29.07.2005
(51) Int. Cl.: B64B 1/32, B64D 47/08, G03B 15/00, G01C 11/02

(54) **System zur 3-D-Modellierung von Objekten**

(30) Priorität: 30.07.2004 DE 102004037353; 02.09.2004 DE 102004042539
(71) Anmelder: AEE Aircraft Electronic Engineering GmbH, 82229 Seefeld/Drössling (DE)
(72) Erfinder: Hirzinger, Gerd, Prof. Dr., 82229 Seefeld (DE)
(74) Vertreter: Winter, Brandl, Fürniss, Hübner Röss, Kaiser, Polte Partnerschaft Patent- und Rechtsanwaltskanzlei

(57) **Zusammenfassung**

Offenbart ist ein System und ein Verfahren zur 3D-Modellierung von Objekten, mit einem steuerbaren Luftschiff (2,78) als Träger für eine 3D-Messanordnung (1), wobei der Antrieb (12,14,20,22,80,82,88,90,94,96) derart ausgelegt ist, dass es quer zu seiner Längsachse verfahrbar ist, um einen vorbestimmten Abstand der Messanordnung (1) zum Objekt beizubehalten.

## Beschreibung

Die Erfindung betrifft ein System zur 3D-Modellierung von Objekten gemäß dem Oberbegriff des Patentanspruchs 1 und ein Verfahren zur 3D-Modellierung von Objekten nach dem Oberbegriff des Patentanspruchs 15.

Die 3D-Modellierung von Objekten aus der Luft hat sich durch die Entwicklung leichter und leistungsfähiger Vermessungstechniken, insbesondere durch die Möglichkeiten der modernen digitalen Photogrammetrie wesentlich verbessert.

Aber auch mit leistungsfähigen, an Flugzeugen angebrachten digitalen Stereokameras kann nur eine durchschnittliche Auflösung des 3D-Modells von 10-15 cm realisiert werden, da bedingt durch die hohe Mindestfluggeschwindigkeit eine Flughöhe von mehreren Kilometern für die Durchführung einer photogrammetrischen Vermessungen benötigt wird.

Dadurch sind zum einen die Anforderungen an die Flugbedingungen aufgrund der benötigten ausreichenden Bodensicht mit nahezu wolkenfreien Bedingungen besonders hoch und zum anderen resultiert aus der hohen Fluggeschwindigkeit, die genannte, meist ungenügend hohe Auflösung.

Für eine genaue 3D-Modellierung, insbesondere von Bauwerken, ist es erforderlich die Fluggeschwindigkeit zu senken und einen vorbestimmten Abstand der 3D-Messanordnung zum Messobjekt einzuhalten, um eine für die Stereophotographie notwendige definierte Bildüberschneidung ohne Fehlstellen zu ermöglichen.

Hubschrauber sind für derartige Anwendungen in Anbetracht der hohen Betriebskosten, aber auch wegen der starken Vibrationen und der erheblichen Lärmbelastung nur bedingt einsetzbar. Eine weitere Möglichkeit ist in der Befliegung mit Luftschiffen zu sehen.

Ein derartiges Luftschiff ist beispielsweise aus der GB 2 366 273 bekannt. Diese Anmeldung offenbart eine Luftvermessungs- und Betrachtungsvorrichtung mit einem Auftriebskörper für den größten Anteil des Auftriebes und einem Antrieb, der den benötigten Restauftrieb und die Steuerkräfte liefert. Dieses Fluggerät ermöglicht zwar die Aufnahme von Bildern aus der Luft, ist aber nicht zur 3D-Modellierung von Objekten mittels Photogrammetrie geeignet, da ein derartiges Luftschiff aufgrund seiner Antriebsanordnung nicht in der Lage ist einen vorbestimmten Abstand und Winkel der Messanordnung zum Objekt einzuhalten.

Demgegenüber liegt der Erfindung die Aufgabe zugrunde, ein System zur 3D-Modellierung von Objekten zu schaffen, das gegenüber herkömmlichen Lösungen eine verbesserte Auflösung aufweist und in der Lage ist einen vorbestimmten Abstand der Messanordnung zum Messobjekt einzuhalten.

Diese Aufgabe wird hinsichtlich des Systems zur 3D-Modellierung von Objekten durch die Merkmale des Patentanspruchs 1 und hinsichtlich des Verfahrens zur 3D-Modellierung von Objekten durch die Merkmale des Patentanspruchs 15 gelöst.

Das erfindungsgemäße System zur 3D-Modellierung von Objekten verwendet ein steuerbares Luftschiff als Träger für eine 3D-Messanordnung, insbesondere einer Photogrammetrieanordnung und ist durch sein Antriebssystem in der Lage einen vorbestimmten Abstand der Messanordnung zum Messobjekt beizubehalten. Hierzu ist der Antrieb des Luftschiffes derart ausgelegt, dass es quer zu seiner Längsachse verfahrbar ist und eine für die Stereophotogrammetrie notwendige definierte Bildüberschneidung ermöglicht.

Bei dem als Träger der 3D-Messanordnung verwendeten Luftschiff kann es sich um ein Luftschiff in Starrer-, Halbstarrer- oder Prallluftschiffbauart handeln, wobei sich die Prallluftschiffbauart aufgrund des geringen Strukturgewichts ohne starre Komponenten wie Träger und Streben in der Luftschiffhülle als besonders vorteilhaft erwiesen hat. Bei diesen unter dem Namen Blimp bekannten Luftschiffen steht die mit Traggas (z.B. Helium) gefüllte Luftschiffhülle bezogen auf den Umgebungsdruck stets unter leichtem Überdruck und bildet so die gewünschte aerodynamische Formgebung aus.

Gemäß einem bevorzugten Ausführungsbeispiel sind zwei Antriebe verschwenkbar an je einem Bugbereich und einem Heckbereich des Luftschiffes angebracht, und zwar so, dass die Propeller-Drehachsen vertikal zur Luftschifflängsachse stehen und um diese schwenkbar sind. Weiterhin sind zwei Hauptantriebe an einer unter der Luftschiffhülle angebrachten Trägerplattform mittels einer verschwenkbar gelagerten Welle angeordnet. Die Bug- und Heckpropeller sind um ±180° um die Luftschifflängsachse aus ihrer Nulllage parallel einer von Luftschifflängs- und Querachse aufgespannten Ebene schwenkbar und derart ausgelegt, dass das Luftschiff quer zu seiner Längsachse verfahrbar ist.

Gemäß einem weiteren Ausführungsbeispiel sind zwei Antriebe verschwenkbar an je einem Bugbereich und einem Heckbereich des Luftschiffes unterhalb der Luftschiffhülle in einer Stabilisierungsflosse angeordnet, und zwar so, dass die Propeller-Drehachsen achsparallel zur Luftschifflängsachse stehen und um eine senkrecht zu der Luftschifflängsachse angeordnete Schwenkachse schwenkbar sind. Dadurch können die Bug- und Heckantriebe, beispielsweise bei einem Ausfall der Hauptantriebe, zur Vorwärtsfahrt des Luftschiffes eingesetzt werden. Die Bug- und Heckpropeller sind um ±90° um die Schwenkachse aus ihrer Nulllage parallel einer von Luftschiffquer- und Hochachse aufgespannten Ebene schwenkbar und derart ausgelegt, dass das Luftschiff quer zu seiner Längsachse verfahrbar ist. Bei dieser Variante sind vier Hauptantriebe an der unter der Luftschiffhülle angebrachten Trägerplattform mittels zwei verschwenkbar an Endabschnitten der Trägerplattform gelagerten Wellen angeordnet.

Die Antriebe sind unabhängig voneinander verschwenkbar an der Trägerplattform und/oder der Luftschiffhülle angeordnet und werden jeweils von einem durch einen Antriebsmotor angetriebenen Propeller gebildet, wobei als Antriebsmotor ein Elektromotor, insbesondere ein elektronisch kommutierter Gleichstrommotor aber auch ein Verbrennungsmotor Verwendung finden kann.

Die Haupttriebwerke können vorzugsweise in einem Bereich von 300° um die Querachse des Luftschiffes verschwenkt werden, wobei zwischen "6 und 8 Uhr" ein toter Winkel liegt. Diese Antriebsanordnung ermöglicht es, neben einer guten Manövrierbarkeit um alle Achsen und einer kompletten Kontrolle der Freiheitsgrade des Luftschiffs auch einen für die Stereophotogrammetrie notwendigen vorbestimmten Abstand der Messanordnung zum Objekt anzusteuern und beizubehalten.

Die verwendete Trägerplattform besteht bei einem Ausführungsbeispiel aus einem Fachwerkgerüst und einer Bodenplatte aus Verbundwerkstoffen und wird mittels Spanngurten und Klettverbindungen an Befestigungspunkten der Luftschiffhülle angebracht. Die Befestigungspunkte sind an der Unterseite in die Luftschiffhülle eingearbeitet und ermöglichen eine schnelle und sichere Montage und Demontage der Trägerplattform am Luftschiff. Diese Befestigungsart erlaubt weiterhin ein Verschieben der Trägerplattform unter der Luftschiffhülle und damit ein Austrimmen der Schwerpunktlage vor dem Flugbetrieb.

Die 3D-Messanordnung weist bei einem erfindungsgemäßen Ausführungsbeispiel zumindest zwei Stereokameras auf, die im Wesentlichen achsparallel zur Luftschifflängsachse drehbar an der Trägerplattform gelagerten Kamerawelle angebracht sind. Die Stereokameras sind mit einem definierten Abstand zueinander an' Endbereichen der Kamerawelle drehfest angebracht und derart miteinander verschaltet, dass sie zeitgleich auslösbar sind und das Messobjekt aus verschiedenen Blickwinkeln aufnehmen. Durch den vorbestimmten Abstand zwischen den Kameras und einem fest eingestellten Schielwinkel der Kamerablickrichtungen zueinander resultiert aus den beiden zeitgleichen Aufnahmen die gewünschte 3D-Tiefenwirkung.

Da sich die Einzelfotos der Kameras für ein größtmögliches Stereophoto im Idealfall komplett überschneiden, ist ein definierter Abstand der 3D-Messanordnung zum Objekt z.B. zu einer Gebäudewand einzuhalten. Der einzuhaltende Abstand wird in Abhängigkeit von dem eingestellten Schielwinkel der Kameras bestimmt und ist während des Fluges nicht mehr veränderbar. Eine Abstandsabweichung, d.h. ein zu großer bzw. zu kleiner Abstand der 3D-Messanordnung zum Objekt, würde Fehlstellen im Stereogesamtbild verursachen.

Die bereits erläuterte erfindungsgemäße Antriebsanordnung ermöglicht es, durch verschwenken der Bug- und Heckpropeller, das Luftschiff quer zu seiner Längsachse zu verfahren und den vorbestimmten Abstand der Messanordnung zum Objekt anzusteuern und beizubehalten.

Zusätzlich können zumindest zwei Videokameras synchron mit den Stereokameras verschwenkbar an der Kamerawelle angebracht sein, die eine Echtzeitübertragung der Sicht der Stereokameras an eine Bodenstation ermöglichen und/oder einen Live-Stereo-Video-Stream generieren.

Bei einem besonders bevorzugten Ausführungsbeispiel werden für die Stereo- und Videokameras hochauflösende Digitalkameras verwendet, die mit geeigneten Speichermedien (z.B. Compact-Flash-Karten oder Microdrive-Laufwerken) bestückt sind und/oder eine Echtzeitübertragung der Aufnahmen an eine Bodenstation erfolgt.

Die verwendete Kamerawelle wird vorzugsweise aus einem Faserverbundwerkstoff bestehend aus einem mit Kohlenstofffasern beschichteten Schaumkern (z.B. PUR-Schaum) mit rundem Querschnitt hergestellt. Die vorbeschriebene Konstruktion ist jedoch nicht auf die genannten Werkstoffe beschränkt, vielmehr kann jeder aus dem Stand der Technik bekannte Faserverbundwerkstoff wie z.B. Glas- oder Aramidfaserverstärkter-Kunststoff mit anderen Kernwerkstoffen Verwendung finden.

Bei einem bevorzugten Ausführungsbeispiel ist die Kamerawelle in zumindest zwei axial beabstandet, an unterseitigen Endbereichen der Trägerplattform angeordneten Lagerblöcken drehbar gelagert. Die Blickrichtung der Stereo- und Videokameras kann von der Bodenstation aus eingestellt werden, hierzu ist zumindest eine Antriebseinheit bestehend aus einem Servomotor mit geeigneter Steuerelektronik der Kamerawelle vorgesehen.

Vor Beginn der Messung befinden sich die Kameras in ihrer 0°-Stellung d.h. mit Blickrichtung zum Boden. Hat das Luftschiff die vom Benutzer gewünschte Messposition am Objekt z.B. einem Gebäude erreicht, wird die Kamerawelle von der Antriebseinheit gedreht und die Kameras in den gewünschten Blickwinkel zum Objekt ausgerichtet. Zu diesem Zweck ist die Kamerawelle aus ihrer 0°-Stellung, d.h. mit Blickrichtung zum Boden, in einem Winkelbereich von zumindest ±90° um ihre Längsachse verschwenkbar.

Für eine 3D-Vermessung mit hoher Genauigkeit ist es notwendig, den vom Benutzer definierten Blickwinkel der Kameras auf das Objekt während der Messfahrt einzuhalten und ein durch auftretende Störgrößen verursachtes Rollen des Luftschiffs um seine Längsachse auszugleichen.

Aus diesem Grund wird nach einer bevorzugten Ausführungsform der Antrieb der Kamerawelle von einem Steuersignal eines auf der Trägerplattform angeordneten Trägheitsmeßgerätes angesteuert. Zu diesem Zweck erfasst das Trägheitsmessgerät jede Lageänderung des Luftschiffs, insbesondere auch seine Rollbewegung um die Längsachse und sendet ein Steuersignal an den Antriebsmotor der Kamerawelle der diese entgegen der Rollrichtung des Luftschiffs dreht. Ein derartiger Rollwinkelausgleich stabilisiert die Blickrichtung der Kameras und verbessert die Qualität der Stereoaufnahmen.

Zur Überwachung und Navigation während des Fluges kann jeweils zumindest eine Überwachungskamera mit Blickrichtung nach vorne, rechts, hinten, links und unten an der Trägerplattform oder der Hülle des Luftschiffs angebracht sein, wobei mittels der Überwachungskameras eine Echtzeitübertragung der Bilder aus Sicht des Luftschiffs an die Bodenstation erfolgt.

Eine vorteilhafte Ausgestaltung des Erfindungsgegenstandes besteht darin, auf der Trägerplattform ein Navigationssystem, insbesondere eine Kombination aus Trägheits- und Satellitennavigationssystem, ggf. gestützt durch den sogenannten optischen Fluß in den Überwachungskameras, zur Bestimmung und Speicherung von Position und Lage des Luftschiffes anzuordnen, wobei eine Echtzeit-Datenübertragung an die Bodenstation dem Benutzer die Navigation wesentlich erleichtern kann. Das Navigationssystem wird weiterhin verwendet, um die während der Messfahrt aufgenommenen Stereobilder eindeutig der jeweiligen Lage und Position des Luftschiffs im Raum zuordnen zu können.

Bei einem weiteren Ausführungsbeispiel ist an der Trägerplattform ein Flugregelungssystem zur Stabilisierung und Korrektur der Fluglage des von der Bodenstation gesteuerten Luftschiffs vorgesehen. Das Flugregelungssystem verwendet Informationen von geeigneten Sensoren über Lage, Position und Geschwindigkeit des Luftschiffs die von einem Zentralrechner eingelesen und ausgewertet werden. Der Zentralrechner steuert aufgrund der ermittelten Werte die zum Ausgleich von auftretenden Störgrößen nötigen Aktoren an und erzeugt damit weitestgehend stabile Flugzustände. Die Aktorik des Luftschiffs kann beispielsweise aus den von Fahrtenreglern angesteuerten Antriebsmotoren, Servomotoren für das Verschwenken der Haupt-, Bug- und Heckantriebe, Servomotoren für die Bewegung von Seiten- und Höhenruder und einem Servomotor zur Betätigung eines Sicherheitsventils zum Traggasnotablass bestehen.

Eine geeignete Flugregelung kann weiterhin eine autonome Flugdurchführung, d.h. ohne Steuereingaben von der Bodenstation aus, ermöglichen. Ein derartiges System ist in der Lage eine vorbestimmte Flugbahn anhand von geeigneten Koordinaten (z.B. GPS-Wegpunkten) in einer definierten Höhe abzufliegen und wieder zum Startpunkt zurückzukehren.

Als besonders vorteilhaft hat es sich erwiesen, wenn die Steuerung und Überwachung des Luftschiffes während des Fluges von einer transportablen Bodenstation aus erfolgt, die an einer geeigneten Stelle in der Nähe des zu vermessenden Objekts positioniert werden kann. Eine direkte Sicht auf das Luftschiff vereinfacht die Durchführung der Messfahrt, ist aber nicht unbedingt notwendig.

Die Flugüberwachung wird vorzugsweise von zwei Flugoperatoren in der Bodenstation durchgeführt, wobei ein Flugoperator mit dem Piloten und der Bodenmannschaft in Funkkontakt steht und ein weiterer Flugoperator die Flugbahn und den Teil des stereographisch zu vermessenden Objekts durch die Videokameras an Bord des Luftschiffs beobachtet und gegebenenfalls Korrekturdaten an den Piloten weiterleitet. Die Flugoperatoren übermitteln weiterhin für eine sichere Flugdurchführung wichtige Informationen, wie Windrichtung, Windstärke, Fluggeschwindigkeit und die technischen Betriebsdaten des Luftschiffs an den Piloten. Der Pilot befindet sich vorzugsweise außerhalb der Bodenstation und bedient mittels einer Funkfernsteuerung das Luftschiff. Die Bodenmannschaft ist für das Loslegen und Festmachen des Luftschiffs sowie für Montage, Demontage und Wartung zuständig.

Ein erfindungsgemäßes Verfahren zur 3D-Modellierung von Objekten verwendet ein steuerbares Luftschiff als Träger für eine 3D-Messanordnung und ermöglicht es, während der Messfahrt des Luftschiffs, einen vorbestimmten Abstand der Messanordnung zum Objekt einzuhalten.

Nach dem Start und Erreichen der gewünschten Flughöhe des Luftschiffs erfolgt das Anfahren eines vorbestimmten Abstandes der 3D-Messanordnung zum Objekt.

Ist die gewünschte Flughöhe und Position zum Objekt erreicht, kann mit dem Messflug begonnen werden, wobei das Luftschiff im Streckenflug entlang des zu vermessenden Objekts fliegt und die photogrammetrische Erfassung durchführt, d.h. die Stereokameras nehmen in von der Fluggeschwindigkeit abhängigen Zeitabständen fortlaufend Stereobilder auf. Nach dem Erreichen der ersten Objektecke erfolgt eine 90°-Drehung um die Hochachse des Luftschiffs und die Fahrt wird entlang der nächsten Objektseite fortgesetzt.

Die beiden Manöver Drehen und Streckenflug werden solange fortgesetzt, bis das Luftschiff den Anfangspunkt des Messfluges erreicht hat und damit die 3D-Messung nach dem vollständigen Umfahren des Objekts abgeschlossen ist.

Während der Messfahrt wird der gewünschte Abstand der Messanordnung zum Objekt durch ein Verfahren des Luftschiffs quer zur Luftschifflängsachse eingehalten, wobei die Bug- und Heckpropeller in die von der Luftschifflängsachse sowie der Luftschiffhochachse aufgespannte Ebene verschwenkt werden und somit das Luftschiff zeitgleich mit der Vorwärtsfahrt quer zu seiner Längsachse verfahrbar ist. Nach Abschluss der Messfahrt wird das Luftschiff auf einem geeigneten Platz in der Nähe der Bodenstation gelandet.

Der erfindungsgemäße Gegenstand ist nicht auf die beschriebene 3D-Vermessung mittels Photogrammetrie beschränkt, vielmehr kann jede aus dem Stand der Technik bekannte Vermessungseinrichtung, insbesondere auch ein 3D-Laserscanner am Luftschiff Verwendung finden.

Sonstige vorteilhafte Weiterbildungen der Erfindung sind Gegenstand der weiteren Unteransprüche.

Im Folgenden werden bevorzugte Ausführungsbeispiele der Erfindung anhand schematischer Zeichnungen näher erläutert. Es zeigen:
Figur 1 eine schematische Darstellung eines ersten Ausführungsbeispiels eines Luftschiffs mit einer 3D-Messanordnung;
Figur 2a eine Seitenansicht des Luftschiffs aus Figur 1;
Figur 2b eine Draufsicht auf das Luftschiff aus Figur 1;
Figur 3 eine schematische Darstellung eines weiteren Ausführungsbeispiels eines Luftschiffs mit einer 3D-Messanordnung;
Figur 4 eine Einzeldarstellung der 3D-Messanordnung;
Figur 5 eine schematische Darstellung der 3D-Messanordnung in Bezug zum Messobjekt;
Figur 6a eine 3D-Messanordnung mit zu kleinem Abstand zum Objekt;
Figur 6b eine 3D-Messanordnung mit zu großem Abstand zum Objekt;
Figur 7a eine Vorderansicht auf das Luftschiff mit 0°-Ausrichtung der 3D-Messanordnung;
Figur 7b eine Vorderansicht auf das Luftschiff mit Ausrichtung der 3D-Messanordnung zum Objekt;
Figur 7c eine Rollbewegung des Luftschiffs mit Rollwinkelausgleich;
Figur 8 eine Unteransicht einer Trägerplattform mit Überwachungskameras und
Figur 9 eine Einzeldarstellung einer Bodenstation.

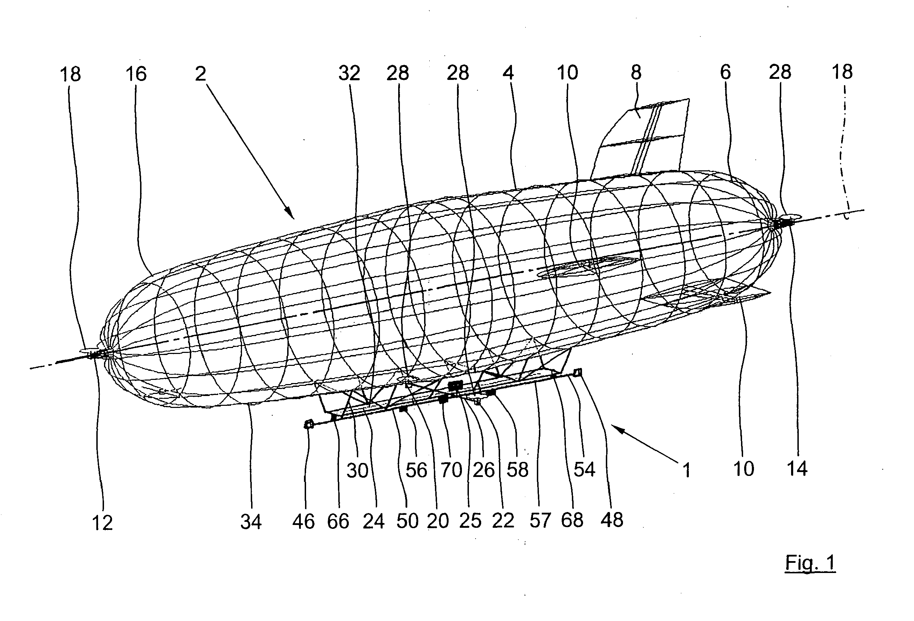

Figur 1 zeigt eine schematische Darstellung eines ersten erfindungsgemäßen Ausführungsbeispiels eines als Träger einer 3D-Messanordnung 1 verwendeten steuerbaren Luftschiffs 2. Bei dem verwendeten Luftschiff 2 handelt es sich um ein Prallluftschiff, dass sich Aufgrund des geringen Strukturgewichts ohne starre Komponenten, wie Träger und Streben, in einer Luftschiffhülle 4 als besonders vorteilhaft erwiesen hat. Die aerodynamische Formgebung wird bei einem derartigen Luftschiff durch die mit Traggas (z.B. Helium) gefüllte Luftschiffhülle 4, die bezogen auf den Umgebungsdruck stets unter leichtem Überdruck steht ausgebildet.

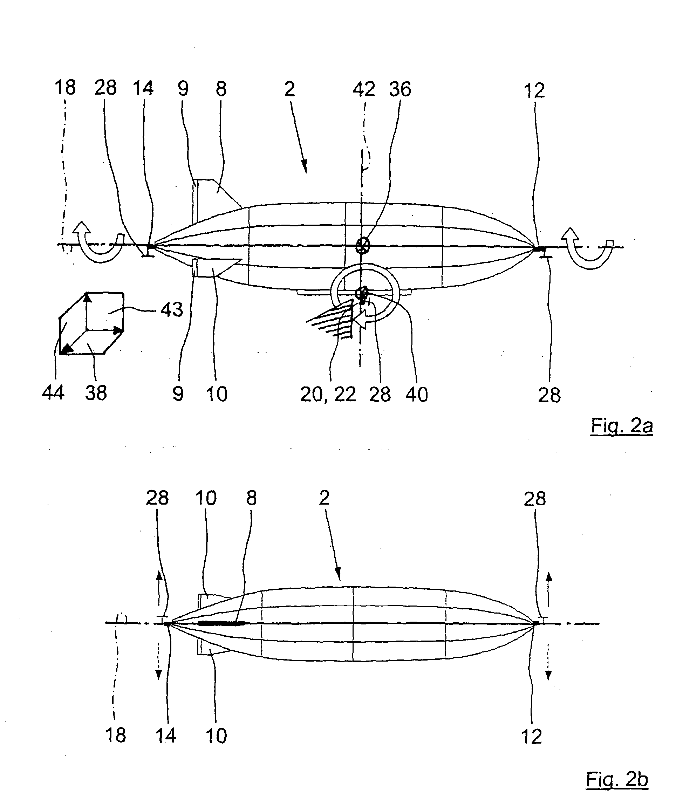

Zur aerodynamischen Stabilisierung während des Fluges sind an einem Heckbereich 6 des Luftschiffs 2 ein Seitenleitwerk 8 und zwei Höhenleitwerke 10 in etwa sternförmig angeordnet. Die Leitwerke 8 bzw. 10 verfügen jeweils über, von nicht dargestellten Aktuatoren betätigte Ruderflächen 9 (siehe Figur 2a) zur aerodynamischen Steuerung des Luftschiffs 2.

Am Luftschiff 2 sind ein Bugantrieb 12 und ein Heckantrieb 14 verschwenkbar an je einem Bugbereich 16 und dem Heckbereich 6 des Luftschiffes 2 koaxial zu einer Luftschifflängsachse 18 an der Luftschiffhülle 4 angeordnet. Weiterhin verfügt das Luftschiff 2 über zwei Hauptantriebe 20, 22 die an einer unter der Luftschiffhülle 4 angebrachten Trägerplattform 24 mittels einer verschwenkbar gelagerten Welle 26 angeordnet sind. Die Antriebe 12, 14, 20, 22 werden jeweils von einem nicht dargestellten Antriebsmotor, der einen Propeller 28 antreibt gebildet. Hierbei kann der Propeller 28 ein Fest- oder Verstellpropeller sein. Als Antriebsmotoren werden vorzugsweise elektronisch kommutierte Gleichstrommotoren verwendet.

Die Trägerplattform 24 besteht aus einem CFK-Fachwerkgerüst 30 und einer rechteckigen Bodenplatte 32 aus Verbundwerkstoffen und wird bspw. mittels nicht dargestellter Spanngurte und Klettverbindungen an Befestigungspunkten der Luftschiffhülle 4 angebracht. Die nicht dargestellten Befestigungspunkte sind an der Unterseite 34 des Luftschiffs in die Luftschiffhülle 4 eingearbeitet und ermöglichen eine sichere Montage und Demontage der Trägerplattform 24 am Luftschiff 2. Eine derartige Befestigung erlaubt ein Verschieben der Trägerplattform 24 in Längs- und/oder Querrichtung unter der Luftschiffhülle 4 und damit ein Austrimmen der Schwerpunktlage vor dem Flugbetrieb.

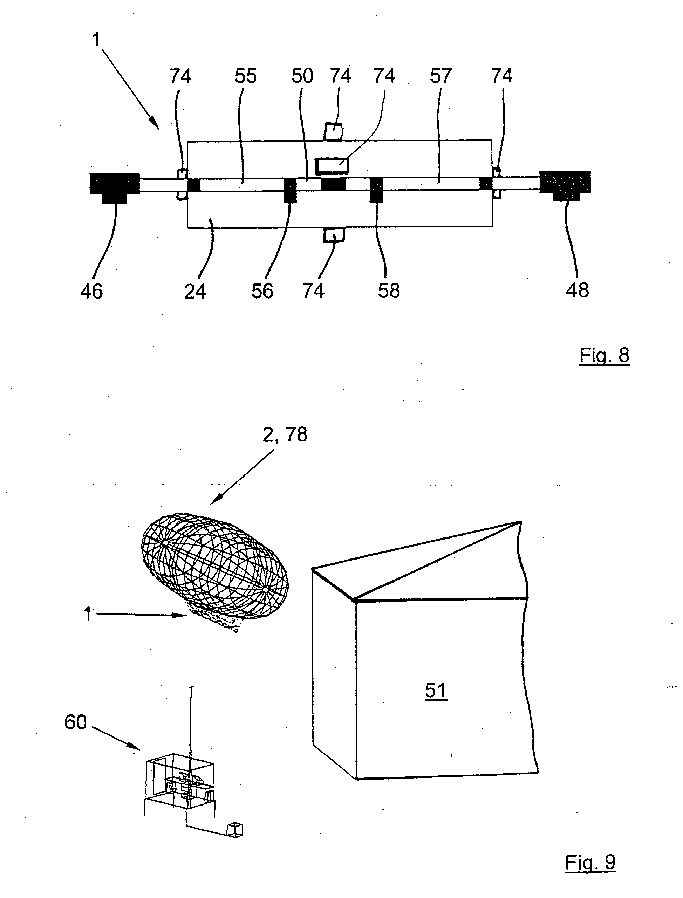

Zur Bestimmung und Speicherung von Position und Lage des Luftschiffes 2 ist auf der Trägerplattform 24 ein Navigationssystem 25 bestehend aus einem Trägheits- und Satellitennavigationssystem angeordnet, wobei eine Echtzeit-Datenübertragung an eine Bodenstation 60 (siehe Figur 9) dem Benutzer die Navigation wesentlich erleichtert. Das Navigationssystem 25 wird weiterhin verwendet, um die während der Messfahrt aufgenommenen Stereobilder eindeutig der jeweiligen Lage und Position des Luftschiffs 2 im Raum zuzuordnen.

An der Trägerplattform 24 ist weiterhin ein nicht dargestelltes Flugregelungssystem zur Stabilisierung und Korrektur der Fluglage vorgesehen.

Wie insbesondere Figur 2a zu entnehmen ist sind die Antriebe 12, 14 bzw. 20, 22 unabhängig voneinander verschwenkbar ausgeführt. Die Bug- und Heckantriebe 12, 14 sind um die Luftschifflängsachse 18 um ±180° aus ihrer Nulllage, parallel zu der von Luftschifflängsachse 18 und Querachse 36 aufgespannten Ebene 38, wie durch Pfeile angedeutet, schwenkbar ausgelegt. Die beiden Haupttriebwerke 20, 22 können in dem durch einen Pfeil angedeuteten Bereich von 300° aus der dargestellten Nulllage d.h. aus der Ebene 44 um eine Schwenkachse 40 verschwenkt werden, wobei im schraffiert angedeuteten Bereich zwischen der 6 und 8 Uhr-Position der tote Winkel, d.h. der nicht ansteuerbare Bereich liegt.

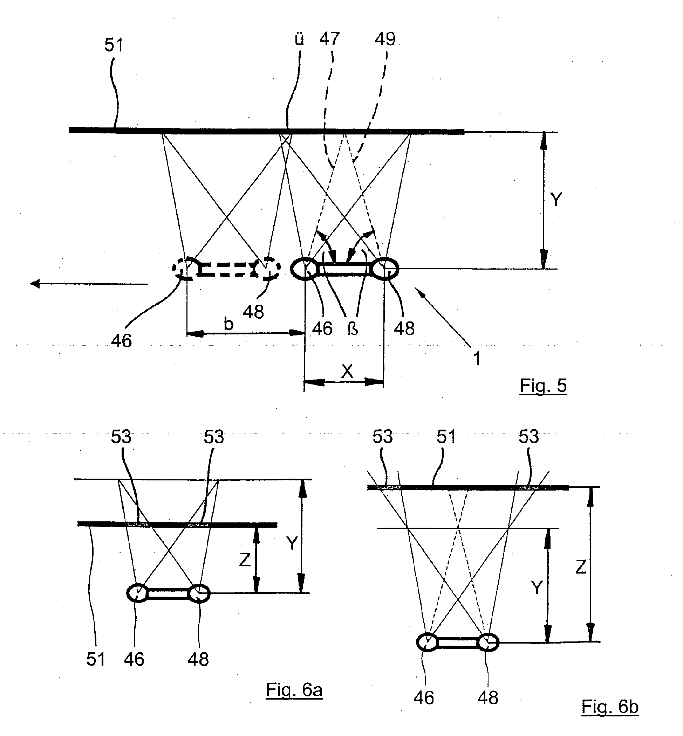

In Figur 2b sind die Bug- und Heckantriebe 12 bzw. 14 in die von Luftschifflängs- und Hochachse 18 bzw. 42 aufgespannte Ebene 43 (siehe Figur 2a) verschwenkt, um das Luftschiff 2 quer zu seiner Längsachse 18 in die durch Pfeile angedeuteten Richtungen zu verfahren. Diese Antriebsanordnung ermöglicht es, neben einer guten Manövrierbarkeit um alle Achsen und einer kompletten Kontrolle der Freiheitsgrade des Luftschiffs 2 auch einen für die Stereophotogrammetrie notwendigen vorbestimmten Abstand Y (siehe Figur 5) der 3D-Messanordnung 1 zum Objekt 51 anzusteuern und beizubehalten.

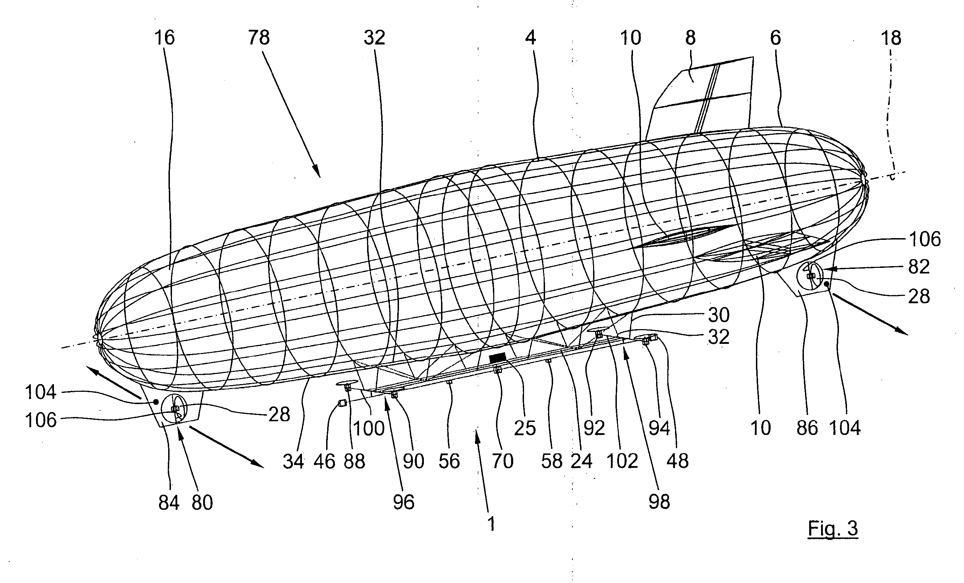

Figur 3 zeigt eine schematische Darstellung eines weiteren erfindungsgemäßen Ausführungsbeispiels eines als Träger einer 3D-Messanordnung 1 verwendeten steuerbaren Luftschiffs 78. Dieses unterscheidet sich von dem vorbeschriebenen Ausführungsbeispiel im Wesentlichen dadurch, dass die Bug- und Heckantriebe 80, 82 jeweils in einer unterhalb der Luftschiffhülle 4 an dem Bugbereich 16 und dem Heckbereich 6 befestigten, im Wesentlichen trapezförmigen Stabilisierungsflosse 84, 86 verschwenkbar angeordnet sind. Weiterhin verfügt das Luftschiff 78 über vier Hauptantriebe 88, 90, 92, 94, die an der unter der Luftschiffhülle 4 angebrachten Trägerplattform 24 mittels zwei verschwenkbar an bug- und heckseitigen Endabschnitten 96, 98 der Trägerplattform 24 gelagerten Wellen 100, 102 angeordnet sind. Die vier Haupttriebwerke 88, 90, 92, 94 können jeweils, wie bereits anhand Figur 2a erläutert, in einem Bereich von 300° verschwenkt werden. Bei dem gezeigten Ausführungsbeispiel sind die Haupttriebwerke 88, 90, 92, 94 um einen Winkel von 90° aus der Nulllage in eine Hubstellung zur Auftriebserzeugung verschwenkt, um beispielsweise das Luftschiff 78 entlang seiner Hochachse 42 zu bewegen.

Die Antriebe 80, 82, 88, 90, 92, 94 werden jeweils von einem nicht dargestellten Antriebsmotor, der den Propeller 28 antreibt gebildet und sind unabhängig voneinander verschwenkbar ausgeführt. Als Antriebsmotoren werden vorzugsweise elektronisch kommutierte Gleichstrommotoren verwendet.

In der gezeigten Grundstellung der Bug- und Heckantriebe 80, 82, mit senkrecht zu einer Seitenfläche 104 der Stabilisierungsflossen 84, 86 ausgerichteter Propellerebene, erzeugen die Bug- und Heckantriebe 80, 82 Längsschub entlang der Luftschifflängsachse 18, so dass, beispielsweise bei einem Ausfall der Hauptantriebe 88, 90, 92, 94 das Luftschiff 78 zu seinem Ausgangspunkt zurückgebracht werden kann. Die Bug- und Heckantriebe 84, 86 sind um eine Schwenkachse 106 um ±90° aus der gezeigten Grundstellung schwenkbar ausgelegt. Um das Luftschiff 78 quer zu seiner Längsachse 18 in die durch Pfeile angedeuteten Richtungen zu verfahren, werden die Bug- und Heckantriebe 80, 82 in die von der Luftschifflängsachse 18 und der Luftschiffhochachse 42 aufgespannte Ebene verschwenkt. Die Antriebsanordnung ermöglicht es, neben einer guten Manövrierbarkeit um alle Achsen und einer kompletten Kontrolle der Freiheitsgrade des Luftschiffs 78 auch den für die Stereophotogrammetrie notwendigen vorbestimmten Abstand Y (siehe Figur 5) der 3D-Messanordnung 1 zum Objekt 51 anzusteuern und beizubehalten.

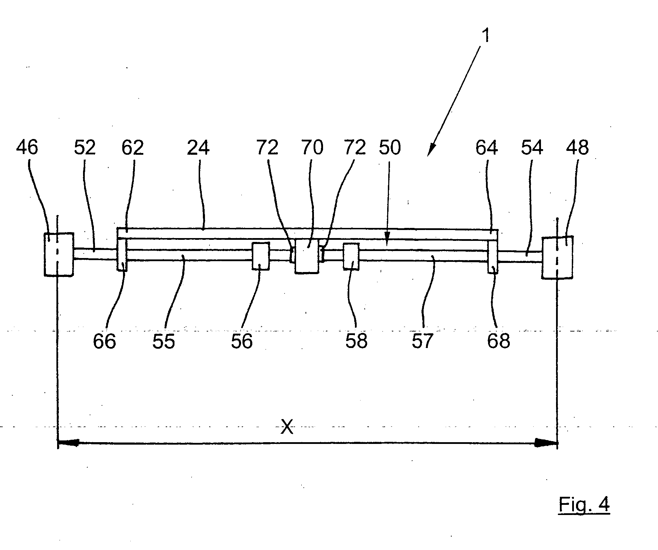

Gemäß Figur 4 weist die 3D-Messanordnung 1 zwei Stereokameras 46, 48 auf, die an einer achsparallel zur Luftschifflängsachse 18 drehbar an der Trägerplattform 24 gelagerten Kamerawelle 50 angebracht sind. Die beiden Stereokameras 46 bzw. 48 sind mit einem definierten Abstand X zueinander an Endbereichen 52, 54 der Kamerawelle 50 drehfest angebracht und derart miteinander verschaltet, dass die Stereokameras 46, 48 zeitgleich auslösbar sind, um das nicht dargestellte Messobjekt gleichzeitig aus verschiedenen Blickwinkeln aufzunehmen.

Zusätzlich sind zwei Videokameras 56, 58 synchron mit den Stereokameras 46, 48 verschwenkbar an der Kamerawelle 50 angebracht, die eine Echtzeitübertragung der Sicht der Stereokameras 46, 48 an eine Bodenstation 60 (siehe Figur 9) ermöglichen.

Bei der dargestellten Variante werden hochauflösende digitale Stereokameras 46, 48 und Videokameras 56, 58 verwendet, die mit geeigneten nicht dargestellten Speichermedien (z.B. Compact-Flash-Karten oder Microdrive-Laufwerken) bestückt sind und eine Echtzeitübertragung der Aufnahmen an die Bodenstation 60 ermöglichen.

Die verwendete Kamerawelle 50 hat zwei Teilwellen 55, 57, die aus einem Faserverbundwerkstoff, bestehend aus einem mit Kohlenstofffasern beschichteten PUR-Schaumkern mit rundem Querschnitt hergestellt und von zwei axial beabstandet an unterseitigen Endbereichen 62, 64 der Trägerplattform 24 angeordneten Lagerblöcken 66, 68 drehbar gelagert sind. Um die Blickrichtung der Stereokameras 46, 48 und der Videokameras 56, 58 von der Bodenstation 60 aus einzustellen und um eine zusätzliche Lagerungsfunktion zu übernehmen, ist eine Antriebseinheit 70 zwischen den Teilwellen 55 bzw. 57 der Kamerawelle 50 angeordnet und durch Kupplungen 72 mit diesen verbunden.

Figur 5 zeigt eine schematische Darstellung der 3D-Messanordnung 1 bestehend aus zwei Stereokameras 46 bzw. 48, wobei das nicht dargestellte Luftschiff in Pfeilrichtung entlang des zu vermessenden Objekts 51 die Flugstrecke b (siehe gestrichelte Position der Stereokameras 46 bzw. 48) zurücklegt und eine photogrammetrische Erfassung mit einer gewünschten Überlappung ü durchführt, d.h. in von der Fluggeschwindigkeit abhängigen Zeitabständen fortlaufend Stereobilder aufnimmt.

Durch den vorbestimmten Abstand X zwischen den Stereokameras 46, 48 und einem fest eingestellten Schielwinkel β der Kamerablickrichtungen 47, 49 zueinander, resultiert aus den beiden zeitgleichen Aufnahmen nach der Aufbearbeitung die gewünschte 3D-Tiefenwirkung.

Für ein größtmögliches Stereophoto ist es notwendig, dass sich die Einzelfotos der Kameras 46, 48 komplett überschneiden, wobei ein definierter Abstand Y der 3D-Messanordnung 1 zum Messobjekt 51 z.B. zu einer Gebäudewand einzuhalten ist. Der Abstand Y wird in Abhängigkeit von dem eingestellten Schielwinkel β der Stereokameras 46, 48 bestimmt und ist während des Fluges nicht mehr veränderbar.

Gemäß Figur 6a und 6b verursacht ein zu kleiner bzw. zu großer Abstand Z der 3D-Messanordnung 1 zum Objekt 51 Fehlstellen 53 im Stereogesamtbild. Die Anhand von Figur 1, 2a, 2b und Figur 3 bereits erläuterte Antriebsanordnung ermöglicht es, das Luftschiff 2 quer zu seiner Längsachse 18 zu Verfahren und den idealen Abstand Y der 3D-Messanordnung 1 zum Objekt 51 anzusteuern und beizubehalten, wobei die Bug- und Heckantriebe 12, 14, 80, 82 in die von der Luftschifflängsachse 18 sowie der Luftschiffhochachse 42 aufgespannte Ebene 43 verschwenkt werden und somit das Luftschiff 2 zeitgleich mit der Vorwärtsfahrt quer zu seiner Längsachse 18, auch entlang schwieriger Objektkonturen, verfahrbar ist.

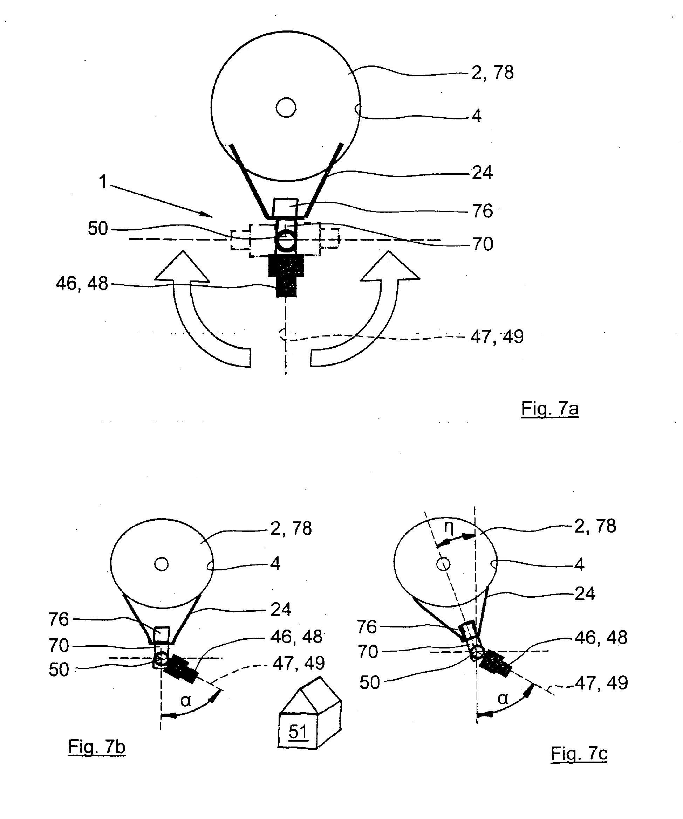

Wie Figur 7a zu entnehmen ist, befinden sich die Kameras 46, 48 vor Beginn der Messung in der dargestellten 0°-Ausrichtung d.h. mit Kamerablickrichtung 47, 49 senkrecht zum Boden. Die Kamerawelle 50 ist in dem durch Pfeile angedeuteten Winkelbereich von ±90° um ihre Längsachse stufenlos bis in eine gestrichelt angedeutete Position verschwenkbar. Ist die gewünschte Messposition am Objekt 51 z.B. einem Gebäude erreicht, wird die Kamerawelle 50 von der Antriebseinheit 70 gedreht und die Kameras 46, 48 wie insbesondere aus Figur 7b ersichtlich ist, in die gewünschte Kamerablickrichtung 47, 49 zum Objekt 51 ausgerichtet.

Für eine 3D-Vermessung mit hoher Genauigkeit ist es notwendig, den vom Benutzer definierten Blickwinkel α der Kameras 46, 48 zum Objekt 51 während der Messfahrt einzuhalten.

Figur 7c zeigt eine durch Störgrößen z.B. Böen verursachte Rollbewegung des Luftschiffs 2, 78 um seine Längsachse 18. Ein auf der Trägerplattform 24 angeordnetes Trägheitsmessgerät 76 erfasst die Rollbewegung des Luftschiffs 2, 78 und sendet ein Steuersignal an die Antriebseinheit 70 der Kamerawelle 50 die diese entgegen der Rollrichtung des Luftschiffs 2, 78 dreht, wobei der entstehende Rollwinkelausgleich η den Blickwinkel α der Kameras 46, 48 stabilisiert und die Qualität der Stereoaufnahmen verbessert.

Gemäß Figur 8 sind zur Überwachung und Navigation während des Fluges Überwachungskameras 74 mit Blickrichtung nach vorne, rechts, hinten, links und unten an der Trägerplattform 24 des Luftschiffs 2, 78 angebracht, mittels denen eine Echtzeitübertragung der Bilder aus Sicht des Luftschiffs 2 an die Bodenstation 60 erfolgt.

Figur 9 zeigt die Bodenstation 60 von der aus während der 3D-Messung an einem Objekt 51 die Steuerung und Überwachung des Luftschiffes 2 erfolgt.

Offenbart ist ein System und ein Verfahren zur 3D-Modellierung von Objekten, mit einem steuerbaren Luftschiff 2 als Träger für eine 3D-Messanordnung 1, wobei der Antrieb 12, 14, 20, 22, 88, 90, 92, 94 derart ausgelegt ist, dass es quer zu seiner Längsachse verfahrbar ist, um einen vorbestimmten Abstand Y der Messanordnung 1 zum Objekt 51 beizubehalten.

### Bezugszeichenliste

- 1: 3D-Messanordnung
- 2: Luftschiff
- 4: Luftschiffhülle
- 6: Heckbereich
- 8: Seitenleitwerk
- 9: Ruderfläche
- 10: Höhenleitwerk
- 12: Bugantrieb
- 14: Heckantrieb
- 16: Bugbereich
- 18: Luftschifflängsachse
- 20: Hauptantrieb
- 22: Hauptantrieb
- 24: Trägerplattform
- 25: Navigationssystem
- 26: Welle
- 28: Propeller
- 30: Fachwerkgerüst
- 32: Bodenplatte
- 34: Unterseite
- 36: Querachse
- 38: Ebene
- 40: Schwenkachse
- 42: Hochachse
- 43: Ebene
- 44: Ebene
- 46: Stereokamera
- 47: Kamerablickrichtung
- 48: Stereokamera
- 49: Kamerablickrichtung
- 50: Kamerawelle
- 51: Messobjekt
- 52: Endbereich Kamerawelle
- 53: Fehlstellen
- 54: Endbereich Kamerawelle
- 55: Teilwelle
- 56: Videokamera
- 57: Teilwelle
- 58: Videokamera
- 60: Bodenstation
- 62: Endbereich Trägerplattform
- 64: Endbereich Trägerplattform
- 66: Lagerblock
- 68: Lagerblock
- 70: Antriebseinheit
- 72: Kupplung
- 74: Überwachungskamera
- 76: Trägheitsmessgerät
- 78: Luftschiff
- 80: Bugantrieb
- 82: Heckantrieb
- 84: Stabilisierungsflosse
- 86: Stabilisierungsflosse
- 88: Hauptantrieb
- 90: Hauptantrieb
- 92: Hauptantrieb
- 94: Hauptantrieb
- 96: Endabschnitt
- 98: Endabschnitt
- 100: Welle
- 102: Welle
- 104: Schwenkachse

## Patentansprüche

1. System zur 3D-Modellierung von Objekten, mit einem steuerbaren Luftschiff (2, 78) als Träger für eine 3D-Messanordnung (1), insbesondere einer Photogrammetrieanordnung, **dadurch gekennzeichnet, dass** der Antrieb (12, 14, 20, 22, 80, 82, 88, 90, 92, 94, 96) des Luftschiffes (2, 78) derart ausgelegt ist, dass es quer zu seiner Längsachse (18) verfahrbar ist, um einen vorbestimmten Abstand Y der Messanordnung (1) zum Objekt (51) beizubehalten.

2. System zur 3D-Modellierung von Objekten nach Anspruch 1, wobei zwei Antriebe (12, 14) verschwenkbar an je einem Bugbereich (16) und einem Heckbereich (6) koaxial zu der Luftschifflängsachse (18) und zwei Antriebe (20, 22) an einer unter einer Luftschiffhülle (4) angebrachten Trägerplattform (24) mittels einer verschwenkbar gelagerten Welle (26) angeordnet sind.

3. System zur 3D-Modellierung von Objekten nach Anspruch 1, wobei zwei Antriebe (80, 82) verschwenkbar an je einem Bugbereich (16) und einem Heckbereich (6) unterhalb einer Luftschiffhülle (4) in einer Stabilisierungsflosse (84, 86) und vier Antriebe (88, 90; 92, 94) an einer unter der Luftschiffhülle (4) angebrachten Trägerplattform (24) mittels zwei verschwenkbar gelagerten Wellen (100, 102) angeordnet sind.

4. System zur 3D-Modellierung von Objekten nach einem der vorhergehenden Ansprüche, wobei der Antrieb (12, 14, 20, 22, 80, 82, 88, 90, 92, 94, 96) von Elektromotoren oder Verbrennungsmotoren, insbesondere von elektronisch kommutierten Gleichstrommotoren gebildet wird.

5. System zur 3D-Modellierung von Objekten nach einem der vorhergehenden Ansprüche, wobei die 3D-Messanordnung (1) zwei Stereokameras (46, 48) aufweist.

6. System zur 3D-Modellierung von Objekten nach Anspruch 4, wobei die Stereokameras (46, 48) an einer im Wesentlichen achsparallel zur Luftschifflängsachse (18) drehbar gelagerten Kamerawelle (50) angebracht sind.

7. System zur 3D-Modellierung von Objekten nach Anspruch 6, wobei zumindest zwei Videokameras (56, 58) synchron mit den Stereokameras (46, 48) verschwenkbar an der Kamerawelle (50) angebracht sind, mittels denen eine Echtzeitübertragung der Sicht der Stereokameras (46, 48) an eine Bodenstation (60) erfolgt.

8. System zur 3D-Modellierung von Objekten nach einem der Ansprüche 5 bis 7, wobei die Stereo- und Videokameras (46, 48, 56, 58) Digitalkameras sind und die Kamerawelle (50) aus Faserverbundwerkstoffen, insbesondere einem CFK/Schaumstoff-Verbund besteht.

9. System zur 3D-Modellierung von Objekten nach einem der vorhergehenden Ansprüche, wobei die Kamerawelle (50) über von zumindest zwei axial beabstandet an der Trägerplattform (24) angeordneten Lagerblöcken (66, 68) gelagert ist und zumindest eine Antriebseinheit (70) der Kamerawelle (50) vorgesehen ist.

10. System zur 3D-Modellierung von Objekten nach Anspruch 9, wobei die Antriebseinheit (70) der Kamerawelle (50) von einem Steuersignal eines Trägheitsmeßgerätes (76) angesteuert wird um die Lage der Stereokameras (46, 48) zu stabilisieren.

11. System zur 3D-Modellierung von Objekten nach einem der vorhergehenden Ansprüche, wobei jeweils zumindest eine Überwachungskamera (74) mit Blickrichtung nach vorne, rechts, hinten, links und unten an der Trägerplattform (24) des Luftschiffes (2) angebracht ist und eine Echtzeitübertragung der Bilder an die Bodenstation (60) erfolgt.

12. System zur 3D-Modellierung von Objekten nach einem der vorhergehenden Ansprüche, wobei an der Trägerplattform (24) ein Navigationssystem, insbesondere ein Trägheitsnavigationssystem und ein Satellitennavigationssystem, zur Bestimmung und Speicherung von Position und Lage des Luftschiffes (2) angeordnet ist und eine Datenübertragung an die Bodenstation (60) erfolgt.

13. System zur 3D-Modellierung von Objekten nach einem der vorhergehenden Ansprüche, wobei die Steuerung und Überwachung des Luftschiffes während des Fluges von einer transportablen Bodenstation (60) aus erfolgt.

14. System zur 3D-Modellierung von Objekten nach einem der vorhergehenden Ansprüche, wobei an der Trägerplattform (24) ein Flugregelungssystem zur Stabilisierung und Korrektur der Fluglage vorgesehen ist.

15. Verfahren zur 3D-Modellierung von Objekten mit einem steuerbaren Luftschiff (2, 78) als Träger für eine 3D-Messanordnung (1), wobei während der Messfahrt des Luftschiffes (2) ein vorbestimmter Abstand Y der Messanordnung (1) zum Objekt (51) eingehalten wird und die Messfahrt mit den Schritten erfolgt:
a) Anfahren eines vorbestimmten Abstandes Y der Messanordnung (1) zum Objekt (51)
b) Fahrt des Luftschiffes (2) entlang des zu vermessenden Objekts (51)
c) Beginn der Messung und
d) Einhalten des vorbestimmten Abstands Y der Messanordnung (1) zum Objekt (51) während der Messung durch ein Verfahren des Luftschiffes (2) quer zur Luftschifflängsachse (18).
